# EUROPEAN PATENT APPLICATION

(11) **EP 4 733 352 A1**
(43) Date of publication of application: **29.04.2026**
(21) Application number: 24832299.2
(22) Date of filing: 04.06.2024
(51) Int. Cl.: C08L 23/10, C08L 51/06, C08K 7/14, C08K 3/34

(54) **POLYPROPYLENE RESIN COMPOSITION AND ARTICLE PRODUCED THEREFROM**

(30) Priority: 26.06.2023 KR 20230081571
(71) Applicant: LOTTE CHEMICAL CORPORATION, Seoul 05551 (KR)
(72) Inventor: KIM, Tae Soo, Uiwiang-si Gyeonggi-do 16073 (KR); KANG, In Sung, Uiwiang-si Gyeonggi-do 16073 (KR); KIM, Hyeong Jun, Uiwiang-si Gyeonggi-do 16073 (KR); LEE, Ji Won, Uiwiang-si Gyeonggi-do 16073 (KR)
(74) Representative: Germain Maureau
(86) International application number: PCT/KR2024/007627
(87) International publication number: WO 2025/005518

(57) **Abstract**

A polypropylene resin composition of the present invention comprises: about 100 parts by weight of a base material including about 30 to about 70 wt% of a polypropylene resin and about 30 to about 70 wt% of a recycled polypropylene resin; about 0.5 to about 5 parts by weight of anhydrous maleic acid-modified polypropylene; about 30 to about 60 parts by weight of a glass fiber having a cross-sectional diameter of about 5 to about 20 *µ*m; about 1 to about 3 parts by weight of magnesium silicate; and about 1 to about 6 parts by weight of zeolite, wherein the weight ratio of the magnesium silicate to the zeolite is about 1: 0.5 to about 1: 4. The polypropylene resin composition is environmentally friendly by using the recycled polypropylene resin, has excellent impact resistance, rigidity, appearance characteristics, and the like, and can reduce odor-causing components and volatile organic compounds.

## Description

### [Technical Field]

The present invention relates to a polypropylene resin composition and a molded article produced therefrom. More particularly, the present invention relates to a polypropylene resin composition which is environmentally friendly by adopting a recycled polypropylene resin and has excellent properties in terms of impact resistance, rigidity, appearance characteristics, and the like while reducing odor-causing components and volatile organic compounds, and a molded article produced therefrom.

### [Background Art]

Polypropylene resins can be easily manufactured into injection molded articles, films, and blow-molded articles due to good chemical resistance, weather resistance, and processability thereof and are widely used in a variety of applications, such as electrical components, automobiles, building materials, and the like.

To address environmental concerns, for example, for reduction in CO₂ emissions, there is growing demand for recycled plastics produced by recycling thermoplastic resins, such as used polypropylene and the like.

However, recycled plastics oxidize over a long period of time during daily use and are subjected to a thermal history once again during reprocessing, which causes deterioration in mechanical properties and the like, as compared to general plastic materials (thermoplastic resin compositions). Moreover, recycled plastics allow low-molecular substances and polar substances to remain in products during processes, such as oxidation, reprocessing, multiple times of extrusion, and the like, and act as volatile substances and odor-causing components, thereby causing odor problems and color change in final products.

Therefore, there is a need for a polypropylene resin composition which is environmentally friendly by adopting a recycled polypropylene resin and has excellent properties in terms of impact resistance, rigidity, appearance characteristics, and the like while reducing odor-causing components and volatile organic compounds, despite the use of the recycled polypropylene resin.

The background technique of the present invention is disclosed in Korean Patent Laid-open Publication No. 10-2015-0141967 and the like.

### [Disclosure]

### [Technical Problem]

It is one object of the present invention to provide a polypropylene resin composition which is environmentally friendly by adopting a recycled polypropylene resin and has excellent properties in terms of impact resistance, rigidity, appearance characteristics, and the like while reducing odor-causing components and volatile organic compounds.

It is another object of the present invention to provide a molded article produced from the polypropylene resin composition.

The above and other objects of the present invention will become apparent from the detailed description of the following embodiments.

### [Technical Solution]

1. One aspect of the present invention relates to a polypropylene resin composition. The polypropylene resin composition includes: about 100 parts by weight of a base material including about 30 wt% to about 70 wt% of a polypropylene resin and about 30 wt% to about 70 wt% of a recycled polypropylene resin; about 0.5 parts by weight to about 5 parts by weight of a maleic anhydride-modified polypropylene; about 30 parts by weight to about 60 parts by weight of glass fibers having a cross-section diameter of about 5 µm to about 20 µm; about 1 part by weight to about 3 parts by weight of magnesium silicate; and about 1 part by weight to about 6 parts by weight of zeolite, wherein a weight ratio of the magnesium silicate to the zeolite is in the range of about 1:0.5 to about 1:4.
2. In embodiment 1, the polypropylene resin may comprise at least one of a homopolypropylene resin, a block polypropylene resin, and a random polypropylene resin.
3. In embodiment 1 or 2, the polypropylene resin may have a melt-flow Index (MI) of about 10 g/10 min to about 1,500 g/10 min, as measured at a temperature of 230°C under a load of 2.16 kg in accordance with ASTM D1238.
4. In embodiments 1 to 3, the recycled polypropylene resin may have a melt-flow Index (MI) of about 10 g/10 min to about 150 g/10 min, as measured at a temperature of 230°C under a load of 2.16 kg in accordance with ASTM D1238.
5. In embodiments 1 to 4, the maleic anhydride-modified polypropylene may have a graft ratio of maleic anhydride in the range of about 0.5 wt% to about 5 wt%.
6. In embodiments 1 to 5, the zeolite may comprise porous particles having a pore size of about 0.1 nm to about 0.8 nm and an average particle size of about 0.5 µm to about 6 µm.
7. In embodiments 1 to 6, the recycled polypropylene resin may be present in an amount of about 20 wt% to about 50 wt% based on 100 wt% of the polypropylene resin composition.
8. In embodiments 1 to 7, the polypropylene resin composition may have a notched Izod impact strength of about 10 kgf·cm/cm to about 20 kgf·cm/cm, as measured on a 1/8" thick specimen in accordance with ASTM D256.
9. In embodiments 1 to 8, the polypropylene resin composition may have a tensile strength of about 850 kgf/cm² to about 1,150 kgf/cm², as measured on a 3.2 mm thick specimen at 50 mm/min in accordance with ASTM D638.
10. In embodiments 1 to 9, the polypropylene resin composition may have a flexural strength of about 1,200 kgf/cm² to about 1,700 kgf/cm², as measured on a 6.4 mm thick specimen at 2.8 mm/min in accordance with ASTM D790.
11. In embodiments 1 to 10, the polypropylene resin composition may have a total volatile organic compound (TVOC) detection area of about 300 area/g to about 600 area/g, as measured on 2 g of a specimen collected at 120°C for 60 minutes using HS-SPME GC/MS.
12. In embodiments 1 to 11, the polypropylene resin composition may have an odor level of 3 to 3.5, as measured on 40 cm³/2 L of a specimen under conditions of 80°C/2 hr and B3 (dry) in accordance with VDA 270.
13. Another aspect of the present invention relates to a molded article. The molded article is formed of the polypropylene resin composition according to any one of embodiments 1 to 12.

### [Advantageous Effects]

The present invention provides a polypropylene resin composition which is environmentally friendly by adopting a recycled polypropylene resin and has excellent properties in terms of impact resistance, rigidity, appearance characteristics, and the like while reducing odor-causing components and volatile organic compounds, and a molded article produced therefrom.

### [Best Mode]

Hereinafter, embodiments of the present invention will be described in detail.

A polypropylene resin composition according to the present invention comprises: (A) a polypropylene resin; (B) a recycled polypropylene resin; (C) a maleic anhydride-modified polypropylene; (D) glass fibers; (E) magnesium silicate; and (F) zeolite.

As used herein to represent a specific numerical range, "a to b" is defined as "≥a and ≤b".

### (A) Polypropylene resin

The polypropylene resin according to one embodiment of the present invention is not only environmentally friendly by adopting a recycled polypropylene resin, but also serves to improve impact resistance, rigidity, appearance characteristics, and the like of the polypropylene resin composition while reducing odor-causing components and volatile organic compounds, when used together with the maleic anhydride-modified polypropylene, glass fibers, magnesium silicate and zeolite, and may include a polypropylene resin (virgin material) used in typical polypropylene resin compositions.

In some embodiments, the polypropylene resin may comprise at least one of a homopolypropylene resin, a block polypropylene resin, and a random polypropylene resin. Here, the block polypropylene resin may include a block polypropylene resin comprising a homopolypropylene block and an ethylene-propylene copolymer block and/or a homopolyethylene block, and the random polypropylene resin may include a propylene-ethylene random copolymer.

In some embodiments, the polypropylene resin may have a melt-flow index (MI) of about 10 g/10 min to about 1,500 g/10 min, for example, about 15 g/10 min to about 1,400 g/10 min, as measured at a temperature of 230°C under a load of 2.16 kg in accordance with ASTM D1238. Within this range, the polypropylene resin composition can have excellent properties in terms of mechanical properties, moldability, and the like.

In some embodiments, the polypropylene resin may be present in an amount of about 30 wt% to about 70 wt%, for example, about 35 wt% to about 65 wt%, based on 100 wt% of a base material comprising the polypropylene resin and the recycled polypropylene resin. If the content of the polypropylene resin is less than about 30 wt% based on 100 wt% of the base material, the polypropylene resin composition can suffer from deterioration in impact resistance, rigidity, appearance characteristics, and the like, and reduction of odor-causing components and volatile organic compounds in the polypropylene resin composition can be insufficient, and if the content of the polypropylene resin exceeds about 70 wt%, the polypropylene resin composition can suffer from deterioration in environmental friendliness.

### (B) Recycled polypropylene resin

When employed as a recycled material in the polypropylene resin composition, the recycled polypropylene resin according to one embodiment serves to impart eco-friendless to the polypropylene resin composition. The recycled polypropylene resin can improve impact resistance, rigidity, appearance characteristics, and the like of the polypropylene resin composition while reducing odor-causing components and volatile organic compounds, when used together with the maleic anhydride-modified polypropylene, glass fibers, magnesium silicate and zeolite, and may be selected from typical recycled polypropylene resins.

In some embodiments, the recycled polypropylene resin may have a melt-flow index (MI) of about 10 g/10 min to about 150 g/10 min, for example, about 20 g/10 min to about 80 g/10 min, as measured at a temperature of 230°C under a load of 2.16 kg in accordance with ASTM D1238. Within this range, the polypropylene resin composition can have excellent properties in terms of rigidity, impact resistance, and the like.

In some embodiments, the polypropylene resin may be present in an amount of about 30 wt% to about 70 wt%, for example, about 35 wt% to about 65 wt%, based on 100 wt% of the base material comprising the polypropylene resin and the recycled polypropylene resin. If the content of the recycled polypropylene resin is less than about 30 wt% based on 100 wt% of the base material, the polypropylene resin composition can suffer from deterioration in environmental friendliness and the like, and if the content of the recycled polypropylene resin exceeds about 70 wt%, the polypropylene resin composition can suffer from can suffer from deterioration in impact resistance, rigidity, appearance characteristics, and the like, and reduction of odor-causing components and volatile organic compounds in the polypropylene resin composition can be insufficient.

### (C) Maleic anhydride-modified polypropylene

The maleic anhydride-modified polypropylene according to one embodiment of the present invention serves to improve impact resistance, rigidity, appearance characteristics, and the like of the polypropylene resin composition while reducing odor-causing components and volatile organic compounds, when applied to the polypropylene resin and the recycled polypropylene resin together with the glass fibers, magnesium silicate, and zeolite, and may include a maleic anhydride-modified polypropylene obtained by polymerizing (grafting) maleic anhydride with (to) polypropylene.

In some embodiments, the maleic anhydride-modified polypropylene may have a graft ratio of maleic anhydride in the range of about 0.5 wt% to about 5.0 wt%, for example, about 0.6 wt% to about 2.0 wt%. Within this range, the polypropylene resin composition can have excellent properties in terms of rigidity, impact resistance, and the like.

In some embodiments, the maleic anhydride-modified polypropylene may have a melt-flow index of about 50 g/10 min to about 200 g/10 min, for example, about 70 g/10 min to about 150 g/10 min, as measured at a temperature of 230°C under a load of 2.16 kg in accordance with ASTM D1238. Within this range, the polypropylene resin composition can have excellent properties in terms of rigidity, impact resistance, and the like.

In some embodiments, the maleic anhydride-modified polypropylene may be present in an amount of about 0.5 parts by weight to about 5 parts by weight, for example, about 1 part by weight to about 4.5 parts by weight, relative to about 100 parts by weight of the base material. If the content of the maleic anhydride-modified polypropylene is less than about 0.5 parts by weight relative to about 100 parts by weight of the base material, the polypropylene resin composition can have poor properties in terms of impact resistance, rigidity, appearance characteristics, and the like, whereas, if the content of the maleic anhydride-modified polypropylene exceeds about 5 parts by weight, the polypropylene resin composition can suffer from deterioration in appearance characteristics and the like.

### (D) Glass fiber

The glass fibers according to one embodiment of the present invention serve to improve environmental friendliness, impact resistance, rigidity, appearance characteristics, and the like of the polypropylene resin composition while reducing odor-causing components and volatile organic compounds, when applied to the polypropylene resin and the recycled polypropylene resin together with the maleic anhydride-modified polypropylene, magnesium silicate, and zeolite, and may include long glass fibers having a cross-section diameter of about 5 µm to about 20 µm.

In some embodiments, the glass fibers may be provided in fiber form and may have various cross-sectional shapes, such as a circular shape, an elliptical shape, a rectangular shape, and the like. For example, the use of fibrous glass fibers having circular and/or rectangular cross-sections as the glass fibers may be advantageous in terms of mechanical properties.

In some embodiments, the glass fibers may have a cross-section diameter of about 5 µm to about 20 µm, for example, about 7 µm to about 15 µm, as measured using a scanning electron microscope (SEM). When the cross-section diameter of the glass fibers is not within this range, the polypropylene resin composition can suffer from deterioration in impact resistance, rigidity, dimensional stability, and the like.

In some embodiments, the glass fibers may be treated with a typical surface treatment agent. The surface treatment agent may include silane compounds, urethane compounds, epoxy compounds, and the like, without being limited thereto.

In some embodiments, the glass fibers may be cut to have a length (for example, about 10 mm) corresponding to the size of the thermoplastic resin composition depending on the shape (pellet shape and the like) of the thermoplastic resin composition, and may have an average length depending on the kind of molded article prepared from the thermoplastic resin composition, for example, an average length of about 2 mm in a molded article prepared from the thermoplastic resin composition.

In some embodiments, the glass fibers may be present in an amount of about 30 parts by weight to about 60 parts by weight, for example, about 35 parts by weight to about 55 parts by weight, relative to about 100 parts by weight of the base material. If the content of the second glass fiber is less than about 30 parts by weight relative to about 100 parts by weight of the base material, the polypropylene resin composition can have poor properties in terms of impact resistance, rigidity and the like, whereas, if the content of the second glass fiber exceeds about 60 parts by weight, the polypropylene resin composition can have poor properties in terms of appearance characteristics and the like.

### (E) Magnesium silicate

The magnesium silicate according to one embodiment can improve environmental friendliness, impact resistance, rigidity, appearance characteristics, and the like of the polypropylene resin composition while reducing odor-causing components and volatile organic compounds, when applied to the polypropylene resin and the recycled polypropylene resin together with the maleic anhydride-modified polypropylene, glass fibers, and zeolite, and may include magnesium silicate applied to a typical thermoplastic resin composition.

In some embodiments, the magnesium silicate may have an average particle size of about 10 µm to about 40 µm, for example, about 13 µm to about 36 µm. Within these ranges, the polypropylene resin composition can reduce the odor-causing components and the volatile organic compounds. Here, the average particle size of the magnesium silicate is defined as a particle size at a cumulative value of 50% obtained from a particle size distribution measured by a laser diffraction/scattering method.

In some embodiments, the magnesium silicate may be present in an amount of about 1 part by weight to about 3 parts by weight, for example, about 1.5 parts by weight to about 2.5 parts by weight, relative to about 100 parts by weight of the base material. If the content of the magnesium silicate is less than about 1 part by weight relative to about 100 parts by weight of the base material, reduction of the odor-causing components in the polypropylene resin composition can be insufficient, whereas, if the content of the magnesium silicate exceeds about 3 parts by weight, the polypropylene resin composition can have poor properties in terms of appearance characteristics and the like.

### (F) Zeolite

The zeolite according to one embodiment of the present invention serves to improve environmental friendliness, impact resistance, rigidity, appearance characteristics, and the like of the polypropylene resin composition while reducing odor-causing components and volatile organic compounds, when applied to the polypropylene resin and the recycled polypropylene resin together with the maleic anhydride-modified polypropylene, glass fibers, and magnesium silicate, and may include zeolite used in typical thermoplastic resin compositions.

In some embodiments, the zeolite may comprise porous particles having a pore size of about 0.1 nm to about 0.8 nm, for example, about 0.3 nm to about 0.6 nm, and an average particle size of about 0.5 µm to about 6 µm, for example, about 1 µm to about 5 µm. Within these ranges, the polypropylene resin composition can have excellent properties in terms of rigidity, impact resistance, and the like. Here, the average particle size of the zeolite is defined as a particle size at a cumulative value of 50% obtained from a particle size distribution measured by a laser diffraction/scattering method.

In some embodiments, the zeolite may be present in an amount of about 1 part by weight to about 6 parts by weight, for example, about 1.5 parts by weight to about 5.5 parts by weight, relative to about 100 parts by weight of the base material. If the content of the zeolite is less than about 1 part by weight relative to about 100 parts by weight of the base material, the polypropylene resin composition can have poor properties in terms of impact resistance and the like, and reduction of odor-causing components and volatile organic compounds in the polypropylene resin composition can be insufficient, whereas, if the content of the zeolite exceeds about 6 parts by weight, the polypropylene resin composition can have poor properties in terms of appearance characteristics, impregnability, and the like.

In some embodiments, a weight ratio of the magnesium silicate to the zeolite may be about 1:0.5 to about 1:4, for example, about 1:1 to about 1:2.5. If the weight ratio of the magnesium silicate to the zeolite is less than about 1:0.5, reduction of odor-causing components and volatile organic compounds in the polypropylene resin composition can be insufficient, and if the weight ratio of the magnesium silicate to the zeolite exceeds about 1:4, the polypropylene resin composition can suffer from deterioration in appearance characteristics and the like.

The polypropylene resin composition according to one embodiment of the present invention may further comprise additives used in typical polypropylene resin compositions. The additives may include, for example, antioxidants, impact modifiers, flame retardants, anti-dripping agents, release agents, nucleating agents, UV stabilizers, pigments, dyes, and mixtures thereof, without being limited thereto.

In some embodiments, the additives may be optionally present in an amount of about 0.001 parts by weight to about 40 parts by weight, for example, about 0.1 parts by weight to about 10 parts by weight, relative to about 100 parts by weight of the base material.

The polypropylene resin composition according to one embodiment of the present invention may be prepared in pellet form by mixing the aforementioned components, followed by melt extrusion in a typical twin-screw extruder at a temperature of about 180°C to about 320°C, for example, about 240°C to about 300°C.

In some embodiments, the recycled polypropylene resin may be present in an amount of about 20 wt% to about 50 wt%, for example, about 22 wt% to about 45 wt%, based on 100 wt% of the polypropylene resin composition. Within this range, the polypropylene resin composition can exhibit excellent properties in terms of environmental friendliness, impact resistance, rigidity, property balance therebetween, and the like, and can reduce odor-causing components and volatile organic compounds.

In some embodiments, the polypropylene resin composition may have a notched Izod impact strength of about 10 kgf·cm/cm to about 20 kgf·cm/cm, for example, about 10.2 kgf·cm/cm to about 16.5 kgf·cm/cm, as measured on a 1/8" thick specimen in accordance with ASTM D256.

In some embodiments, the polypropylene resin composition may have a tensile strength of about 850 kgf/cm² to about 1,150 kgf/cm², for example, about 870 kgf/cm² to about 1,120 kgf/cm², as measured on a 3.2 mm thick specimen at 50 mm/min in accordance with ASTM D638.

In some embodiments, the polypropylene resin composition may have a flexural strength of about 1,200 kgf/cm² to about 1,700 kgf/cm², for example, about 1,220 kgf/cm² to about 1,650 kgf/cm², as measured on a 6.4 mm thick specimen at 2.8 mm/min in accordance with ASTM D790.

In some embodiments, the polypropylene resin composition may have a total volatile organic compound (TVOC) detection area of about 300 area/g to about 600 area/g, for example, about 310 area/g to about 550 area/g, as measured on 2 g of a specimen collected at 120°C for 60 minutes using HS-SPME GC/MS.

In some embodiments, the polypropylene resin composition may have an odor level of 3 to 3.5, as measured on 40 cm³/2 L of a specimen under conditions of 80°C/2 hr and B3 (dry) in accordance with VDA 270.

A molded article according to the present invention is produced from the polypropylene resin composition described above. The polypropylene resin composition may be prepared in pellet form. The prepared pellets may be manufactured into various molded articles (products) by various molding methods, such as injection molding, extrusion, vacuum molding, casting, and the like. These molding methods are well known to a person having ordinary knowledge in the art to which the present invention pertains.

In some embodiments, the molded article is environmentally friendly by adopting a recycled polypropylene resin, has excellent properties in terms of impact resistance, rigidity, appearance characteristics, and the like, and can reduce odor-causing components and volatile organic compounds. Accordingly, the molded article is useful for applications, such as interior/exterior materials for automobiles, electrical/electronic products, and the like, particularly for interior materials for automobiles and the like.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows.

### (A) Polypropylene resin

A homopolypropylene resin (H-PP, melt-flow index: 140 g/10 min, product name: J-190H, manufacturer: Lotte Chemical Co., Ltd.) was used.

### (B) Recycled polypropylene resin

A recycled polypropylene resin (melt-flow index: 30 g/10 min, product name: R170LC, manufacturer: Woori Plastics Co., Ltd.) was used.

### (C) Maleic anhydride-modified polypropylene

A maleic anhydride-modified polypropylene (graft ratio of maleic anhydride: 1 wt%, product name: CM1120H, manufacturer: Lotte Chemical Co., Ltd.) was used.

### (D) Glass fiber

Glass fibers (long glass fiber, cross-section diameter: 17 µm, length: 11 mm, product name: SE4121, manufacturer: Owens Corning Co., Ltd.) were used.

### (E) Magnesium silicate

Magnesium silicate (product name: SEAWARDSOL 300, manufacturer: Giant Chemical Co., Ltd.) was used.

### (F) Zeolite

Zeolite (average particle size: about 3 µm, pore size: about 0.45 nm, product name: Zeolite 4A, manufacturer: HUIYING Chemical Industry Co., Ltd.) was used.

### Examples 1 to 11 and Comparative Examples 1 to 12

The aforementioned components were mixed in amounts as listed in Tables 2, 3, 4, and 5, followed by extrusion at 250°C, thereby preparing a polypropylene resin composition in pellet form. Here, extrusion was performed using a twin-screw extruder (L/D: 40, diameter: 75 mm). The prepared pellets were dried at 80°C for 2 hours or more and then subjected to injection molding using a 110-ton injection molding machine (molding temperature: 230°C, mold temperature: 40°C), thereby preparing a specimen. The prepared specimen was evaluated as to the following properties. Results are shown in Tables 2, 3, 4, and 5.

### Property evaluation

(1) Notched Izod Impact strength (unit: kgf·cm/cm): Notched Izod impact strength was measured on a 1/8" thick specimen in accordance with ASTM D256.
(2) Tensile strength (unit: kgf/cm²): Tensile strength was measured on a 3.2 mm thick specimen at 50 mm/min in accordance with ASTM D638.
(3) Flexural strength (unit: kgf/cm²): Flexural strength was measured on a 6.4 mm thick specimen at 2.8 mm/min in accordance with ASTM D790.
(4) Total volatile organic compound (TVOC) detection area: Total volatile organic compound detection area (area/g) was measured on 2 g of a specimen collected at 120°C for 60 minutes using HS-SPME GC/MS (headspace solid-phase micro-extraction coupled to gas chromatography/mass spectrometry). Measurement conditions and pretreatment method are as follows.

### - Measurement condition

**Table 1**

| Parameters | | Conditions |
|---|---|---|
| HSS | Headspace sampler | Agilent GC-6890N |
| | Method | Conditions (Temp.: 120°C, Collecting time: 60 min) |
| GC | Column | Carbowax 20M (ID: 0.32 mm, L 25 m, film thickness 0.30 µm) |
| | Mobile phase | He |
| | Pressure | 7.8 psi |
| | Flow | 2.0 ml/min (Average velocity = 32 cm/sec) |
| | Split | Split ratio = 5:1 |
| | Method | 40°C 3 min → 200°C 4 min (R=12°C/min) |
| | Detector | FID |

### - Pretreatment method

1) A specimen (2 g of pellet) is placed in a HSS vial.
2) Conditions for a headspace sampler were set as above.

(5) Odor evaluation: An odor level of 40 cm³/2L of the specimen was evaluated under conditions of 80°C/2hr and B3 (dry) in accordance with VDA 270.

(6) Appearance evaluation: After preparing five injection molded specimens according to the following steps, the number of fiber clumps on the surface of each injection molded specimen was checked and an average value was calculated. Then, appearance characteristics (fiber dispersion) were evaluated according to the following criteria.
- Step 1: A plate-shaped injection molded specimen having a size of 340 mm × 250 mm × 2 mm was prepared using a 220 ton injection machine (Engel Co., Ltd.).
- Step 2: Three evaluators checked the number of fiber clumps (fiber clump length: 0.3 cm or more) on the surface of each injection-molded specimen.

### - Evaluation criteria

(∘: 0 to 30 fiber clumps, Δ: 31 to 50 fiber clumps, ×: 51 or more fiber clumps)

**Table 2**

| | Example | | | | |
|---|---|---|---|---|---|
| | 1 | 2 | 3 | 4 | 5 |
| (A) (wt%) | 35 | 52.5 | 65 | 52.5 | 52.5 |
| (B) (wt%) | 65 | 47.5 | 35 | 47.5 | 47.5 |
| (C) (parts by weight) | 2.8 | 2.8 | 2.8 | 1 | 4.5 |
| (D) (parts by weight) | 45 | 45 | 45 | 45 | 45 |
| (E) (parts by weight) | 2.1 | 2.1 | 2.1 | 2.1 | 2.1 |
| (F) (parts by weight) | 2.1 | 2.1 | 2.1 | 2.1 | 2.1 |
| Notched Izod impact strength (kgf·cm/cm) | 10.4 | 12.3 | 13.2 | 11.8 | 13.5 |
| Tensile strength (kgf/cm²) | 870 | 950 | 990 | 920 | 1,010 |
| Flexural strength (kgf/cm²) | 1,230 | 1,350 | 1,430 | 1,395 | 1,460 |
| TVOC (area/g) | 510 | 422 | 399 | 416 | 485 |
| Odor evaluation (level) | 3.5 | 3.3 | 3.1 | 3.2 | 3.4 |
| Appearance evaluation | ○ | ○ | ○ | ○ | ○ |

| | | | | | |
|---|---|---|---|---|---|
| * parts by weight: parts by weight relative to 100 parts by weight of base material (A+B) | | | | | |

**Table 3**

| | Example | | | | | |
|---|---|---|---|---|---|---|
| | 6 | 7 | 8 | 9 | 10 | 11 |
| (A) (wt%) | 52.5 | 52.5 | 52.5 | 52.5 | 52.5 | 52.5 |
| (B) (wt%) | 47.5 | 47.5 | 47.5 | 47.5 | 47.5 | 47.5 |
| (C) (parts by weight) | 2.8 | 2.8 | 2.8 | 2.8 | 2.8 | 2.8 |
| (D) (parts by weight) | 35 | 55 | 45 | 45 | 45 | 45 |
| (E) (parts by weight) | 2.1 | 2.1 | 1.5 | 2.5 | 1.5 | 2.5 |
| (F) (parts by weight) | 2.1 | 2.1 | 2.1 | 2.5 | 1.5 | 5.5 |
| Notched Izod impact strength (kgf·cm/cm) | 11.5 | 16.2 | 12.7 | 12.3 | 10.2 | 14.3 |
| Tensile strength (kgf/cm²) | 880 | 1,120 | 940 | 950 | 900 | 1,070 |
| Flexural strength (kgf/cm²) | 1,250 | 1,610 | 1,340 | 1,430 | 1,390 | 1,540 |
| TVOC (area/g) | 489 | 336 | 442 | 418 | 530 | 315 |
| Odor evaluation (level) | 3.5 | 3.3 | 3.5 | 3.1 | 3.4 | 3.1 |
| Appearance evaluation | ○ | ○ | ○ | ○ | ○ | ○ |

| | | | | | | |
|---|---|---|---|---|---|---|
| * parts by weight: parts by weight relative to 100 parts by weight of base material (A+B) | | | | | | |

**Table 4**

| | Comparative Example | | | | | |
|---|---|---|---|---|---|---|
| | 1 | 2 | 3 | 4 | 5 | 6 |
| (A) (wt%) | 25 | 75 | 52.5 | 52.5 | 52.5 | 52.5 |
| (B) (wt%) | 75 | 25 | 47.5 | 47.5 | 47.5 | 47.5 |
| (C) (parts by weight) | 2.8 | 2.8 | 0.1 | 6 | 2.8 | 2.8 |
| (D) (parts by weight) | 45 | 45 | 45 | 45 | 25 | 65 |
| (E) (parts by weight) | 2.1 | 2.1 | 2.1 | 2.1 | 2.1 | 2.1 |
| (F) (parts by weight) | 2.1 | 2.1 | 2.1 | 2.1 | 2.1 | 2.1 |
| Notched Izod impact strength (kgf·cm/cm) | 8.8 | 13.8 | 9.5 | 13.2 | 8.9 | 16.7 |
| Tensile strength (kgf/cm²) | 810 | 980 | 840 | 1,005 | 805 | 1,120 |
| Flexural strength (kgf/cm²) | 1,180 | 1,430 | 1,290 | 1,460 | 1,100 | 1,610 |
| TVOC (area/g) | 707 | 422 | 422 | 485 | 409 | 336 |
| Odor evaluation (level) | 4.1 | 3.3 | 3.3 | 3.5 | 3.5 | 3.3 |
| Appearance evaluation | × | ○ | × | × | ○ | × |

| | | | | | | |
|---|---|---|---|---|---|---|
| * parts by weight: parts by weight relative to 100 parts by weight of base material (A+B) | | | | | | |

**Table 5**

| | Comparative Example | | | | | |
|---|---|---|---|---|---|---|
| | 7 | 8 | 9 | 10 | 11 | 12 |
| (A) (wt%) | 52.5 | 52.5 | 52.5 | 52.5 | 52.5 | 52.5 |
| (B) (wt%) | 47.5 | 47.5 | 47.5 | 47.5 | 47.5 | 47.5 |
| (C) (parts by weight) | 2.8 | 2.8 | 2.8 | 2.8 | 2.8 | 2.8 |
| (D) (parts by weight) | 45 | 45 | 45 | 45 | 45 | 45 |
| (E) (parts by weight) | 0.5 | 4.5 | 2.5 | 2.5 | 1 | 3 |
| (F) (parts by weight) | 1.0 | 4.5 | 0.5 | 6.5 | 6 | 1 |
| (E):(F) (weight ratio) | - | - | - | - | 1:6 | 1:0.25 |
| Notched Izod impact strength (kgf·cm/cm) | 10.8 | 12.8 | 9.6 | 14.2 | 13.5 | 11.8 |
| Tensile strength (kgf/cm²) | 950 | 1,070 | 930 | 990 | 980 | 930 |
| Flexural strength (kgf/cm²) | 1,310 | 1,470 | 1,270 | 1,495 | 1,470 | 1,340 |
| TVOC (area/g) | 589 | 350 | 637 | 290 | 323 | 655 |
| Odor evaluation (level) | 4.3 | 3.5 | 3.7 | 3.1 | 3.3 | 3.8 |
| Appearance evaluation | ○ | × | ○ | × | Δ | ○ |

| | | | | | | |
|---|---|---|---|---|---|---|
| * parts by weight: parts by weight relative to 100 parts by weight of base material (A+B) | | | | | | |

From the above results, it could be seen that the polypropylene resin compositions according to the present invention were environmentally friendly by adopting the recycled polypropylene resin in a particular amount or more (20 wt% or more based on the total amount of the composition) and had excellent properties in terms of impact resistance (notched Izod impact strength), rigidity (tensile strength, flexural strength), appearance characteristics, and the like.

Conversely, it could be seen that the polypropylene resin composition prepared using an insufficient amount of the polypropylene resin and an excess of the recycled polypropylene resin (Comparative Example 1) suffered from deterioration in impact resistance, rigidity, appearance characteristics, and the like, and suffered from insufficient reduction of the odor-causing components and the volatile organic compounds; and the polypropylene resin composition prepared using an excess of the polypropylene resin and an insufficient amount of the recycled polypropylene resin (Comparative Example 2) contained about 16 wt% of the recycled polypropylene resin, which does not meet the environmental friendliness goals of the present invention. It could be seen that the polypropylene resin composition prepared using an insufficient amount of the maleic anhydride-modified polypropylene (Comparative Example 3) suffered from deterioration in impact resistance, rigidity, appearance characteristics, and the like; the polypropylene resin composition prepared using an excess of the maleic anhydride-modified polypropylene (Comparative Example 4) suffered from deterioration in appearance characteristics and the like; the polypropylene resin composition prepared using an insufficient amount of the glass fibers (Comparative Example 5) suffered from deterioration in impact resistance, rigidity, and the like; and the polypropylene resin composition prepared using an excess of the glass fibers (Comparative Example 6) suffered from deterioration in appearance characteristics and the like. It could be seen that the polypropylene resin composition prepared using an insufficient amount of magnesium silicate (Comparative Example 7) suffered from insufficient reduction of the odor-causing components; the polypropylene resin composition prepared using an excess of magnesium silicate (Comparative Example 8) suffered from deterioration in appearance characteristics and the like; the polypropylene resin composition prepared using an insufficient amount of zeolite (Comparative Example 9) suffered from deterioration in impact resistance, and the like, and suffered from insufficient reduction of odor-causing components and volatile organic compounds; and the polypropylene resin composition prepared using an excess of zeolite (Comparative Example 10) suffered from deterioration in appearance characteristics, impregnability, and the like. In addition, even when the content of magnesium silicate and the content of zeolite were within the ranges of the present invention, the polypropylene resin composition of Comparative Example 11, which was prepared using the magnesium silicate and the zeolite in a weight ratio (about 1:6) greater than the weight ratio of the present invention, suffered from deterioration in appearance characteristics and the like, and the polypropylene resin composition of Comparative Example 12, which was prepared using the magnesium silicate and the zeolite in a weight ratio (about 1:0.25) less than the weight ratio of the present invention, suffered from insufficient reduction of the odor-causing components and volatile organic compounds.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A polypropylene resin composition comprising:
about 100 parts by weight of a base material comprising about 30 wt% to about 70 wt% of a polypropylene resin and about 30 wt% to about 70 wt% of a recycled polypropylene resin;
about 0.5 parts by weight to about 5 parts by weight of a maleic anhydride-modified polypropylene;
about 30 parts by weight to about 60 parts by weight of glass fibers having a cross-section diameter of about 5 µm to about 20 µm;
about 1 part by weight to about 3 parts by weight of magnesium silicate; and
about 1 part by weight to about 6 parts by weight of zeolite,
wherein a weight ratio of the magnesium silicate to the zeolite is in the range of about 1:0.5 to about 1:4.

2. The polypropylene resin composition according to claim 1, wherein the polypropylene resin comprises at least one of a homopolypropylene resin, a block polypropylene resin, and a random polypropylene resin.

3. The polypropylene resin composition according to claim 1 or 2, wherein the polypropylene resin has a melt-flow Index (MI) of about 10 g/10 min to about 1,500 g/10 min, as measured at a temperature of 230°C under a load of 2.16 kg in accordance with ASTM D1238.

4. The polypropylene resin composition according to any one of claims 1 to 3, wherein the recycled polypropylene resin has a melt-flow Index (MI) of about 10 g/10 min to about 150 g/10 min, as measured at a temperature of 230°C under a load of 2.16 kg in accordance with ASTM D1238.

5. The polypropylene resin composition according to any one of claims 1 to 4, wherein the maleic anhydride-modified polypropylene has a graft ratio of maleic anhydride in the range of about 0.5 wt% to about 5 wt%.

6. The polypropylene resin composition according to any one of claims 1 to 5, wherein the zeolite comprises porous particles having a pore size of about 0.1 nm to about 0.8 nm and an average particle size of about 0.5 µm to about 6 µm.

7. The polypropylene resin composition according to any one of claims 1 to 6, wherein the recycled polypropylene resin is present in an amount of about 20 wt% to about 50 wt% based on 100 wt% of the polypropylene resin composition.

8. The polypropylene resin composition according to any one of claims 1 to 7, wherein the polypropylene resin composition has a notched Izod impact strength of about 10 kgf·cm/cm to about 20 kgf·cm/cm, as measured on a 1/8" thick specimen in accordance with ASTM D256.

9. The polypropylene resin composition according to any one of claims 1 to 8, wherein the polypropylene resin composition has a tensile strength of about 850 kgf/cm² to about 1,150 kgf/cm², as measured on a 3.2 mm thick specimen at 50 mm/min in accordance with ASTM D638.

10. The polypropylene resin composition according to any one of claims 1 to 9, wherein the polypropylene resin composition has a flexural strength of about 1,200 kgf/cm² to about 1,700 kgf/cm², as measured on a 6.4 mm thick specimen at 2.8 mm/min in accordance with ASTM D790.

11. The polypropylene resin composition according to any one of claims 1 to 10, wherein the polypropylene resin composition has a total volatile organic compound (TVOC) detection area of about 300 area/g to about 600 area/g, as measured on 2 g of a specimen collected at 120°C for 60 minutes using HS-SPME GC/MS.

12. The polypropylene resin composition according to any one of claims 1 to 11, wherein the polypropylene resin composition has an odor level of 3 to 3.5, as measured on 40 cm³/2 L of a specimen under conditions of 80°C/2 hr and B3 (dry) in accordance with VDA 270.

13. A molded article produced from the polypropylene resin composition according to any one of claims 1 to 12.
